Europäisches Patentamt

European Patent Office

Office européen des brevets

(11) Publication number: **0 189 246**
**B1**

(12) EUROPEAN PATENT SPECIFICATION

(45) Date of publication of patent specification: **15.03.89**

(21) Application number: **86300061.8**

(22) Date of filing: **07.01.86**

(51) Int. Cl.⁴: **F 16 D 23/00, F 16 C 19/52,**
**F 16 D 25/08**

(54) Bearing fail-safe device.

(30) Priority: **22.01.85 US 693190**

(43) Date of publication of application:
**30.07.86 Bulletin 86/31**

(45) Publication of the grant of the patent:
**15.03.89 Bulletin 89/11**

(84) Designated Contracting States:
**BE DE FR GB IT SE**

(56) References cited:
**FR-A-2 307 174**
**GB-A-1 041 476**
**US-A-3 760 916**

(73) Proprietor: **HORTON MANUFACTURING CO.,INC.**
**1170-15th Avenue Southeast**
**Minneapolis Minnesota 55414 (US)**

(72) Inventor: **Hanks, James V.**
**3308 Indiana Av. North Robbinsdale**
**Minnesota 55422 (US)**

(74) Representative: **Mayes, Stuart David et al**
**BOULT, WADE & TENNANT 27 Furnival Street**
**London, EC4A 1PQ (GB)**

Courier Press, Leamington Spa, England.

## Description

The present invention relates generally to bearing fail-safe devices and more particularly to a fail-safe device for rotational control apparatus which prevents undesired rotation in the event of bearing failure and seizure.

During normal use and operation of control apparatus of various types, various components wear and are prone to fail due to this wear. One such component is the bearings provided in such control apparatus. Bearings are provided for allowing rotation between a first member and a second member such as between a drive shaft and a rotatable hub to be driven by such shaft. However, bearings are prone to wear and failure from use. Bearings may seize during such a failure resulting in undesired mutual rotation of the members of the control apparatus. Such undesired mutual rotation may cause damage to the machinery which the apparatus controls, the work piece which is being operated upon by such machinery, and/or the personnel operating or attempting to repair or maintain such machinery. Thus, a need has arisen for fail-safe devices for preventing undesired mutual rotation of members rotatably mounted to each other by bearings as a result of bearing failure.

The applicants' own earlier patent US—A—3760916 shows a typical example of rotational control apparatus in which it is desirable to provide a fail-safe device in case of bearing failure. US—A—3760916 shows rotational control apparatus of the kind comprising a first member, a second member, at least one bearing rotatably mounting the first member with respect to the second member, and means for selectively rotationally interrelating the first and second members, which means includes a drive element which is arranged to rotate with the second member and which is arranged to be axially movable relative to the second member to engage or disengage respective torque transfer means provided on the first member and the drive element, the first member comprising a hub part and being mounted on the bearing via the hub part.

It is known for modifications to be made to bearings themselves in an effort to increase their life or load capacity or as a fail-safe measure in the event of their failure or seizure. In GB—A—1041476, for example, it is proposed to build up the inner and outer races of a conventional ball bearing by adding multiple ring plain bearings so that the normal rolling contact of the bearing is accompanied by sliding contact of the multiple rings. The modification is claimed to allow the bearing greater resistance to shock loads and higher rotational speeds. In FR—A—2307174, it is proposed that the outer race of a bearing should be in two parts which are connected by a meltable ring. The idea is for the meltable ring to melt and flow away in the event of overheating and leave radial and axial clearance between the two parts of the outer race.

However, neither GB—A—1041476 nor FR—A—2307174 encounters the problem of axially directed thrust loads, which are inherent in the kind of rotational control apparatus in which the present invention relates. The present invention is characterized in that in rotational control apparatus of the kind defined above, the first member further comprises a separate collar part with the collar part being received on the hub part, with means being provided for preventing relative axial movement between the collar and hub parts, and the torque transfer means of the first member being provided on the collar part, the collar part having a radially extending portion which is arranged to abut an axially facing portion of the hub part and transfer axial thrust therebetween when the respective torque transfer means are in engagement, ensuring that under such operation the collar and hub parts retain the same rotational position relative to each other, the hub and collar parts remaining in the same rotational position relative to each other under normal operation when the bearing allows relative rotation between the first and second members, but being capable of relative rotation under operation when the bearing has failed and seized and the respective torque transfer means have been moved out of engagement.

The invention has the advantage that special bearings are not required, but the same bearings can be used as are used on conventional apparatus of this kind.

By way of example, an embodiment of the invention will now be described with reference to the accompanying drawings, in which:

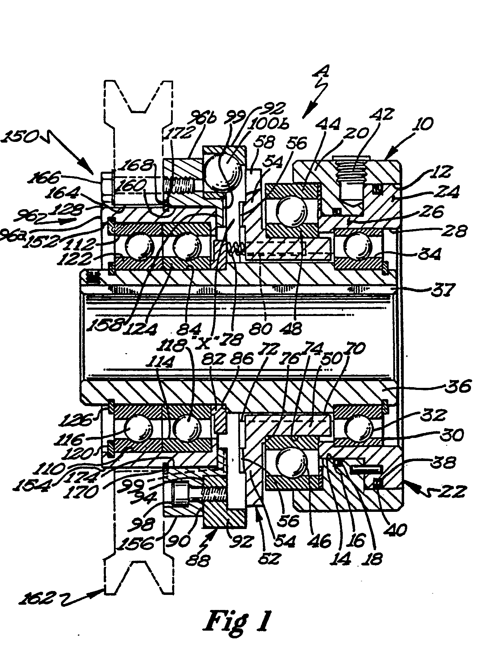

Figure 1 shows a cross sectional view of a rotational control apparatus in accordance with the present invention.

A rotational control apparatus in accordance with the present invention is shown in Figure 1 in its most preferred form, which is a single position fluid operated clutch A of the same type as shown and described in applicants' own earlier patent US—A—3760916. The apparatus has a bearing fail-safe device which is generally designated 150.

In its most preferred form, bearing fail-safe device 150 includes mount 96 which includes a first hub portion 96a and a second, collar portion 96b. In the preferred embodiment, hub portion 96a is generally cylindrical in construction including an inner surface 152 and an outer surface 154. Inner surface 152 includes annular recess 110 in which outer races 112 and 114 are press fit and held therein by lock ring 120.

In the preferred embodiment, collar portion 96b is generally annular in construction including a cylindrical portion 156 and a radially extending portion 158 extending from the axially inward end of cylindrical portion 156. Portion 156 includes an inner surface 160 having a size and shape complementary to and for receipt on surface 154 of hub portion 96a. Particularly, surface 160 has a size and shape relative to surface 154 to form a break away connection between hub portion 96a and collar portion 96b forming mount 96. Specifically, hub portion 96a will maintain the same relative rotational position as collar portion 96b unless a torque force is applied to hub portion 96a which is not simultaneously applied to collar portion 96b such as in the case of bearing failure and seizure. In that event, portions 96a and 96b will break away and relative rotation will occur between hub portion 96a and collar portion 96b.

Collar portion 96b further includes recess 94 into which ball carrier ring 88 is secured for mounting a multiplicity of balls 100b. Teeth 99 are provided on the axially inward end of collar portion 96b generally extending from recess 94 through the radially inward end of portion 158.

In its most preferred use, clutch A further includes a sheeve 162 having an inner opening 164 having a size and shape complementary to and for receipt on surface 154 of portion 96a. Sheeve 162 is held in the same rotational position as collar portion 96b by bolts 166 axially extending through sheeve 162 into the axially outward end of collar portion 96b.

In the preferred embodiment of the present invention, sheeve 162 and collar portion 96b are held on hub portion 96a by the abutment of portion 158 with the axially inward end of hub portion 96a and by a snap ring 168 captured in a groove 170 formed in surface 154 and received in a recess 172 formed in the axially outward end of collar portion 96b. Snap ring 168 may be further axially captured in recess 172 when sheeve 162 abuts with axially outward end of collar portion 96b.

Device 150 further includes provisions 174 allowing relative rotation of sheeve 162 and collar portion 96b with respect to hub portion 96a and for reducing the frictional interaction therebetween if and when bearings 116 and 118 should wear and/or fail and seize mount 96. In its most preferred form, provisions 174 is a bronze or iron solid film lubricant. In its most preferred form, provisions 174 is secured to collar portion 96b to prevent relative rotation therebetween and is not connected to hub portion 96a to allow relative rotation therebetween for purposes to be explained further hereinafter.

In operation, assuming bearings 116 and 118 are operating as designed and specifically seizure has not occurred, clutch A including fail-safe device 150 operates in the same manner as clutch A described in applicants' US—A—3760916. Particularly hub portion 96a and collar portion 96b and ring 88 and balls 100b are in the same rotational position and form a single mount 96. It can be appreciated that the rotational positions of portions 96a and 96b and hub 36 are dependent on the position of piston 22.

However, if bearings 116 and 118 should fail for any reason and should seize within recess 110, the rotational position of portions 96a and 96b forming mount 96 is dependent on the position of piston 22. Particularly, if piston 22 is not actuated in its most preferred form such that springs 78 separate teeth 56 and 99, portion 96a will rotate with hub 36 due to bearing failure; however, portion 96b, and sheeve 162 attached thereto will be rotationally independent from portion 96a and hub 36 due to the division of mount 96 into separate component portions 96a and 96b and also due to the rotational interface provisions 174.

Thus, it can be appreciated that undesired rotation of sheeve 162 as the result of bearing failure is prevented utilizing device 150 according to the present invention. This is especially important in clutches of the type and/or variety exemplified in US—A—3760916 where specific rotation positions are desired between hub 36 and sheeve 162. Further, the unexpected and often catastrophic running of machines when bearings fail possibly damaging the machine, the work piece in the machine or body portions of the operator located in the machine controlled by the clutch is prevented.

A subtle feature of the present invention can now be specifically set forth and appreciated. Specifically, it should be appreciated that teeth 99 and total force transfer between the clutch components occurs through portion 96b and the major function of portion 96a is a carrier for portion 96b.

Furthermore, provisions 174 provide a further degree of safety in addition to the break away connection provided between portions 96a and 96b according to the present invention. Specifically, as bearings 116 and 118 begin to wear and fail, less power is transferred between collar portion 96b and hub portion 96a. Therefore, collar portion 96b will slip on hub portion 96a due to the reduction of frictional interaction provided by provisions 174. Thus, an early warning is provided that bearings 116 and 118 are wearing and should be replaced before complete failure and seizure. That, fail-safe device 150 according to the present invention provides a safety valve to control apparatus A by first providing a visual indication of wear to allow bearing replacement before failure and further to provide protection against power flow that bypasses the clutching interface in the event of bearing failure.

Although rotational control apparatus has been described in its most preferred embodiment of a clutch of the type and variety of US—A—3760916, other types and varieties of apparatus which provide selective torque transfer between first and second members may be realised. For example, clutches may be either fluid, spring, electrically, or otherwise actuated. Likewise, clutches may be engageable in two or more driving positions or in random driving positions. Further, other selectively rotationally relating surfaces of the clutch components other than teeth 56 and 99 as shown may be used. For example, friction disks and rings or other types of frictionally interrelating surfaces may be used.

## Claims

1. Bearing fail-safe device for, rotational control apparatus of the kind comprising a first member (96), a second member (36), at least one bearing (116, 118) rotatably mounting the first member with respect to the second member, and means for selectively rotationally interrelating the first and second members, which means includes a drive element (50) which is arranged to rotate with the second member and which is arranged to be axially movable relative to the second member to engage or disengage respective torque transfer means (99, 56) provided on the first member and the drive element, the first member (96) comprising a hub part (96a) and being mounted on the bearing (116, 118) via the hub part, characterized in that the first member further comprises a separate collar part (96b), with the collar part being received on the hub part, with means (168) being provided for preventing relative axial movement between the collar and hub parts, and the torque transfer means (99) of the first member being provided on the collar part, the collar part having a radially extending portion (158) which is arranged to abut an axially facing portion of the hub part and transfer axial thrust therebetween when the respective torque transfer means (99, 56) are in engagement, ensuring that under such operation the collar and hub parts retain the same rotational position relative to each other, the hub and collar parts remaining in the same rotational position relative to each other under normal operation when the bearing allows relative rotation between the first and second members, but being capable of relative rotation under operation when the bearing has failed and seized and the respective torque transfer means have been moved out of engagement.

2. Bearing fail-safe device for rotational control apparatus as claimed in Claim 1 further characterised by means for reducing the frictional interaction between the hub part (96a) and the collar part (96b) of the first member (96) in the event that relative rotation occurs therebetween as the result of bearing failure.

3. Bearing fail-safe device for rotational control apparatus as claimed in Claim 2 wherein the frictional interaction reducing means comprises a solid film lubricant (174).

**Patentansprüche**

1. Lager-Sicherheitseinrichtung für ein Drehsteuergerät der Art mit einem ersten Element (96), einem zweiten Element (36), zumindest einem Lager (116, 118), das das erste Element mit Bezug auf das zweite Element drehbar befestigt, und einer Einrichtung zum wählweisen drehbaren Koppeln des ersten und das zweiten Elementes, wobei diese Einrichtung ein Antriebselement (50) aufweist, das mit dem zweiten Element drehen kann und axial relativ zu dem zweiten Element bewegt werden kann, um mit entsprechenden Drehmomentübertragungseinrichtungen (99, 56), die auf dem ersten Element und dem Antriebselement vorgesehen sind, in Eingriff zu kommen bzw. gelöst zu werden, wobei das erste Element (96) einen Nabenbereich (96a) aufweist und auf dem Lager (116, 118) über den Nabenbereich befestigt ist, dadurch gekennzeichnet, daß das erste Element ferner ein separates Ringteil (96b) aufweist, wobei das Ringteil auf den Nabenteil aufgenommen ist und wobei eine Einrichtung (168) vorgesehen ist zum Verhindern einer relativen axialen Bewegung zwischen dem Ring- und dem Nabenteil und die Drehmomentübertragungseinrichtung (99) des ersten Elementes auf dem Ringteil vorgesehen ist, wobei das Ringteil einen an sich radial erstreckenden Bereich (158) aufweist, der so ausgebildet ist, daß er an einen axialen Anschlag bereich auf dem Nabenteil anstößt und axialen Druck dazwischen überträgt, wenn die entsprechenden Drehmomentübertragungseinrichtungen (99, 56) in Eingriff sind, wodurch sichergestellt wird, daß bei einem derartigen Betrieb das Ringteil und das Nabenteil in der gleichen Drehposition relativ zueinander verbleiben, wobei die Naben- und Ringteile bei normalen Betrieb in der gleichen Drehposition relativ zueinander verbleiben, wenn das Lager eine relative Drehung zwischen den ersten und dem zweiten Element ermöglicht, aber eine Relativdrehung im Betrieb ausführen können, wenn das Lager fehlerhaft und festgelaufen ist und die entsprechenden Drehmomentübertragungseinrichtungen sich außer Eingriff bewegt haben.

2. Einrichtung nach Anspruch 1, gekennzeichnet durch Mittel zum Reduzieren der Reibungswechselwirkung zwischen den Nabenteil (96a) und dem Ringteil (96b) des ersten Elementes (96) für den Fall, daß eine Relativdrehung zwischen ihnen aufgrund eines Lagerfehlers auftritt.

3. Einrichtung nach Anspruch 2, dadurch gekennzeichnet, daß die Einrichtung zum Reduzieren der Reibungswechselwirkung ein Festfilm-Schmiermittel (174) aufweist.

**Revendications**

1. Palier à dispositif de sécurité pour un appareil de commande de rotation du type comportant un premier élément (96), un second élément (36), au moins un palier (116, 118) supportant à rotation le premier élément par rapport au second élément, et des moyens en vue de lier en rotation sélectivement les premier et second éléments, moyens comprenant un élément d'entraînement (50) qui est agencé pour tourner avec le second élément et qui est agencé pour être déplaçable axialement par rapport au second élément pour engager ou dégager des moyens de transfert de couple respectif (99, 56) prévus sur le premier élément et l'élément d'entraînement, le premier élément (96) comportant un moyeu (96a), et étant monté sur le palier (116, 118) par l'intermédiaire du moyeu, caractérisé en ce que le premier élément comporte en outre un collier distinct (96b), le collier étant reçu sur le moyeu, des moyens (168) étant prévus en vue d'empêcher un mouvement axial relatif entre le collier et le moyeu, et les moyens de transfert de couple (99) du premier élément étant prévus sur le collier, le collier possédant une partie (158) s'étendant radialement qui est agencée pour s'appuyer contre une partie orientée axialement du moyeu et tarnsférer une poussée axiale entre eux lorsque les moyens de transfert de couple respectifs (99, 56) sont en prise, assurant que dans un tel fonctionnement le collier et le moyeu conservent la même position rotationnelle relative entre eux, le moyeu et le collier demeurant dans le même position rotationnelle relative entre eux en fonctionnement normal lorsque le palier permet une rotation relative entre les premier et second éléments, mais pouvant effectuer une rotation relative en fonctionnement lorsque le palier est en panne et grippé et lorsque les moyens de transfert de couple respectifs ont été dégagés.

2. Palier à dispositif de sécurité pour un appareil de commande de rotation selon la revendication 1, caractérisé en outre par des moyens en vue de réduire l'interaction de friction entre le moyeu (96a) et le collier (96b) du premier élément (96) dans l'éventualité de l'apparition d'une rotation relative entre eux en résultat l'une panne de palier.

3. Palier à dispositif de sécurité pour un appareil de commande de rotation selon la revendication 2, dans lequel les moyens de réduction d'interaction de friction sont constitués par un lubrifiant sous la forme d'une pellicule solide (174).

**Fig 1**